# EUROPEAN PATENT SPECIFICATION

(11) **EP 2 554 839 B1**
(45) Date of publication and mention of the grant of the patent: **23.09.2020**
(21) Application number: 11176709.1
(22) Date of filing: 05.08.2011
(51) Int. Cl.: F03D 15/00, F16H 57/033

(54) **Platform gearboxes for wind turbines**
Plattformgetriebegehäuse für Windturbinen
Boîtes de vitesse de plateforme pour éoliennes

(43) Date of publication of application: 06.02.2013
(73) Proprietor: ZF Wind Power Antwerpen NV, 3920 Lommel (BE)
(72) Inventor: Leimann, Dirk-Olaf, 2650 Edegem (BE)
(74) Representative: Vogt, Alexander

(56) References cited:
- EP-A1- 1 631 758
- WO-A1-2004/005762
- WO-A1-2010/030724
- WO-A1-2011/056344
- WO-A2-03/004908
- CN-Y- 201 170 290
- DE-A1- 2 649 949
- DE-A1- 3 542 622
- DE-A1- 3 903 517
- DE-A1-102009 037 005
- DE-A1-102009 040 479
- DE-B3- 10 318 945
- US-A1- 2006 138 781
- US-A1- 2008 207 388
- US-A1- 2008 279 686
- US-A1- 2010 113 210
- HAGEDORN H G: "KUNDENSPEZIFISCHE PLANETENGETRIEBE AUS DEM BAUKASTEN", ANTRIEBSTECHNIK, VEREINIGTE FACHVERLAGE, MAINZ, DE, vol. 40, no. 12, 1 December 2001 (2001-12-01), pages 16-18, XP001112000, ISSN: 0722-8546
- Anonymous: "Planetary Gear Reducers - Products | MITSUI MIIKE MACHINERY CO., LTD.", , 1 March 2010 (2010-03-01), XP055584821, Retrieved from the Internet: URL:https://web.archive.org/web/2010030123 0848/http://www.mitsuimiike.co.jp/english/ product/power/transmission/index.html [retrieved on 2019-04-30]
- Katalog Nr ET AL: "PULS-Planetengetriebe", , 1 January 2006 (2006-01-01), pages 17-21, XP055585069, Retrieved from the Internet: URL:http://www.tecnongroup.com/e_pdfs/PULS GETRIEBE/Katalog%20136%20P%20Stand%2020-06 -06.pdf [retrieved on 2019-05-02]

## Description

### Technical field of the invention

The present invention relates to platform gearboxes for wind turbines. More particularly, the present invention relates to a group of gearboxes comprising at least two series of gearboxes, each series comprising at least three gearboxes for a different torque.

### Background of the invention

Today's wind turbine drives or gearboxes are custom made mass products and their properties and design depend on the needs and requirements of the customer. This increases the time required to design and manufacture these gearboxes, and thus increases the time to market. Such gearboxes have to be manufactured in high quantities to be cost efficient. However, nowadays the wind energy market has changed and the required quantities are lower due to more specific designs, more competitive gearbox manufacturers and also a shorter time to market is required.

Two major gearbox designs which comprise a combination of planetary gears with cylindrical gears are known. In one design, the gearbox comprises one planetary stage and two cylindrical or parallel stages while in the other design the gearbox comprises two planetary stages and one cylindrical or parallel stage.

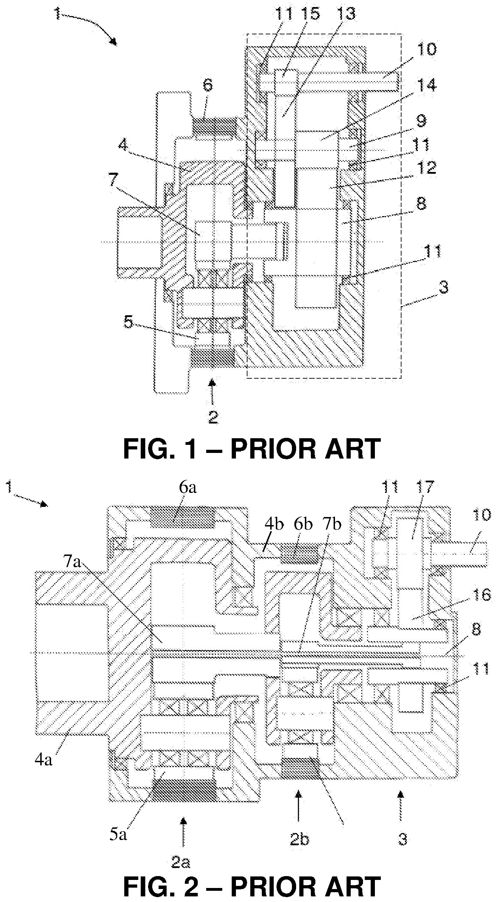

Fig. 1 schematically illustrates a gearbox 1 according to the prior art. In this example, the gearbox 1 comprises a planetary gear unit comprising one planetary gear stage 2 and a two-stage parallel gear unit 3. The planetary gear stage 2 comprises a planet carrier 4 which supports a plurality of planet gears 5. The planetary gear stage 2 furthermore comprises a ring gear 6 and a sun gear 7. In the example given in Fig. 1 the two-stage parallel gear unit 3 comprises a low speed shaft 8, an intermediate shaft 9 and a high speed shaft 10, which are all parallel to each other and which are each rotatably supported by bearings 11. The parallel gear unit 3 furthermore comprises two gears 12, 13. The gears 12, 13 respectively mesh with pinion 14 on the intermediate shaft 9 and pinion 15 on the high speed shaft 10.

According to other known concepts, gearboxes 1 for wind turbines may comprise a planetary gear unit with two planetary gear stages 2a, 2b and a one-stage parallel gear unit 3. This is illustrated in Fig. 2. Each of the planetary gear stages 2a, 2b comprises a planet carrier 4a, 4b which supports a plurality of planet gears 5a, 5b, a ring gear 6a, 6b and a sun gear 7a, 7b. The parallel gear unit 3 of the present example differs from the example shown in Fig. 1 in that it only comprises a low speed shaft 8 and a high speed shaft 10, and no intermediate shaft. The low speed shaft 8 and the high speed shaft 10 are rotatably supported by bearings 11. In this example, the parallel gear unit 3 comprises one gear 16 which is carried on the low speed shaft 8 and the high speed shaft 10 and which meshes with pinion 17 on the high speed shaft 10.

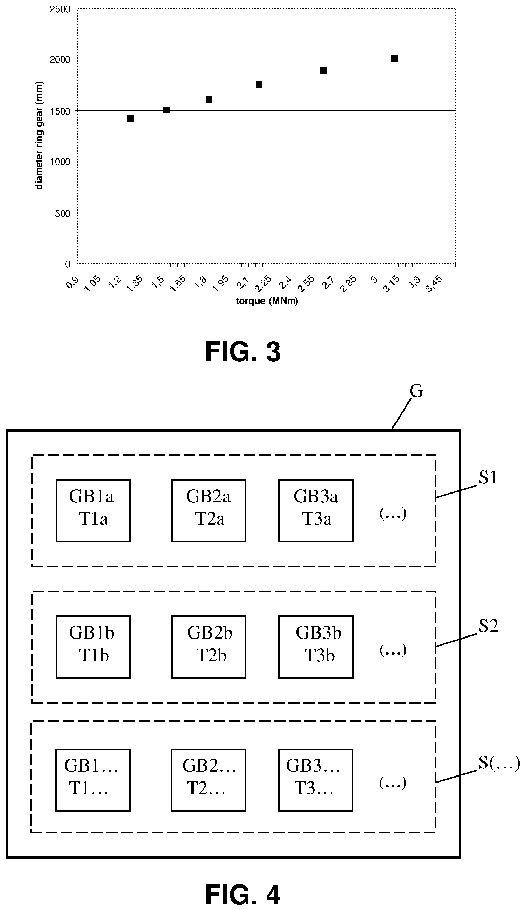

Preference of one type of gearbox over the other may, amongst others, be torque related. For standard designed gearboxes with, for example, a planetary stage with three planet gears, a higher torque requires gearboxes with larger dimensions. Fig. 3 shows the outer diameter of the ring gear 6 for a first planetary gear stage 2 of a particular gearbox as a function of the transmitted torque. It can be seen from this figure that, the higher the required torque, the larger the dimension of the ring gear 6 becomes, and thus consequently, the larger the dimensions of the gearbox become.

Custom built gear units can be provided for all kinds of torques with a certain development and production cost. However, since the 1950's it has been known that standardisation of e.g. housings and rotating parts throughout series of gear units can be very important in achieving required quality at minimised cost by enabling batch production.

In order to be competitive with custom built gear units, an optimal market adequacy of the series has to be aimed at. This means that the series needs to include gearboxes for an as best as possible range of different torques to meet potential customer needs and this must be achieved without adversely affecting manufacturing and related costs

DE3903517A1 discloses a group of gearboxes, the group of gearboxes comprising at least two series of gearboxes, each series comprising at least three gearboxes for different torques, each of the gearboxes of a series comprising a first planetary gear stage comprising a sun gear, a ring gear, and three, four or six planet gears, wherein for each of the gearboxes of the series, the sun gears in the first planetary gear stage have a same number of teeth, the ring gears in the first planetary gear stage have a same number of teeth, the planet gears in the first planetary gear stage each have a same number of teeth and all gears in the first planetary gear stage have a same module, wherein each of the gearboxes of a series furthermore comprises a second planetary gear stage.

### Summary of the invention

The present invention provides a group of gearboxes for a wind turbine, also referred to as platform gearboxes. The group of gearboxes comprises at least two series of gearboxes. Each series comprises at least three gearboxes for different input torques, also referred to as rotor torques, higher than 0.2 MNm, for example higher than 0.5 MNm, higher than 0.8 MNm or higher than 1 MNm. Each of the gearboxes of a series comprises a first planetary gear stage comprising a sun gear, a ring gear, and three, four, five or six planet gears. For each of the gearboxes of the series the sun gears in the first planetary gear stage have a same number of teeth, the ring gears in the first planetary gear stage have a same number of teeth and the planet gears in the first planetary gear stage each have a same number of teeth. Furthermore, all the gears of the first planetary gear stage have a same module.

The principle of the present invention gives benefits to dimensions and re-use of parts for the manufacturing of gearboxes. With re-use of parts is meant that parts, such as planet gears, ring gears or sun gears with particular dimensions and properties can be used for different gearboxes with different torque, and do not have to be redesigned each time a new gearbox with different required torque is ordered. Re-use of parts significantly reduces the time to market of gearboxes. It can furthermore significantly reduce the manufacturing costs of gearboxes. Moreover, according to embodiments of the invention, while they benefit from the advantages with respect to time to market and cost described above, such platform gearboxes are still reliable and robust products.

According to embodiments of the invention, each of the series of gearboxes may cover a different torque range.

For the first planetary gear stage in each gearbox of a series the sum of the teeth of the ring gear and the teeth of the sun gear may be 60, 120 or 180. According to a preferred embodiment, the sum of the teeth of the ring gear and the teeth of the sun gear may be 120.

According to embodiments of the invention, the number of teeth of the ring gear in the first planetary gear stage may be between 88 and 98 and the number of teeth of the sun gear in the first planetary gear stage may be between 22 and 32.

According to the first option of claim 1, the first planetary gear stage of each of the gearboxes of a series may comprise three, four or five planet gears. This means that the planetary gear stage of a first gearbox of the series comprises three planet gears, the planetary gear stage of a second gearbox of the series comprises four planet gears and the planetary gear stage of a third gearbox of the series comprises five planet gears.

According to such embodiments, the number of teeth of the sun gear in the first planetary gear stage may be 27, the number of teeth of the planet gears in the first planetary gear stage may be between 29 and 34, for example between 30 and 33, and may preferably be 31 or 32, and the number of teeth of the ring gear in the first planetary gear stage may be -93.

According to the second option of claim 1, , the first planetary gear stage of each of the gearboxes of a series may comprise four, five or six planet gears, i.e. the planetary gear stage of a first gearbox of the series comprises four planet gears, the planetary gear stage of a second gearbox of the series comprises five planet gears and the planetary gear stage of a third gearbox of the series comprises six planet gears.

According to still further embodiments of the invention, each series may, for example, comprise four gearboxes. In such series, the planetary gear stage of a first gearbox may comprise three planet gears, the planetary gear stage of a second gearbox may comprise four planet gears, the planetary gear stage of a third gearbox may comprise five planet gears and the planetary gear stage of a fourth gearbox may comprise six planet gears.

Each of the gearboxes of a series may furthermore comprises a second planetary gear stage comprising a ring gear, a sun gear and three, four, five or six planet gears.

According to more specific embodiments of the invention, each of the gearboxes of a series may comprise a second planetary gear stage which comprises three or four planet gears. This means that the second planetary gear stage of a first gearbox of the series may comprise three planet gears and the second planetary gear stage of the second gearbox of the series may comprise four planet gears.

In each of the gearboxes of a series the sun gears in the second planetary gear stage may have a same number of teeth, the ring gears in the second planetary gear stage may have a same number of teeth and the planet gears in the second planetary gear stage may have a same number of teeth. All gears in the second planetary gear stage may have a same module.

According to the invention, the first planetary gear stage and the second planetary gear stage of each of the gearboxes in a series have a common ring gear. This means that the ring gear of the first planetary gear stage may be the same as the ring gear of the second planetary gear stage or that a same ring gear is used for both the first and second planetary gear stage.

According to other not claimed embodiments, the first planetary gear stage and the second planetary gear stage may each have their own ring gear. According to such not claimed embodiments, the ring gear of the first planetary gear stage and the ring gear of the second planetary gear stage may have a same diameter or may have a different diameter.

Each of the gearboxes of a series may furthermore comprise a parallel gear unit. According to embodiments of the invention, the parallel gear unit may be a one-stage parallel gear unit. According to other embodiments, the parallel gear unit may be a two-stage parallel gear unit.

### Brief description of the drawings

It has to be noted that same reference signs in the different figures refer to same, similar or analogous elements.
Fig. 1 and Fig. 2 schematically illustrate gearbox concepts according to the prior art.
Fig. 3 shows the outer ring diameter as a function of transmitted torque for a first planetary gear stage of prior art gearboxes.
Fig. 4 schematically illustrates the principle of embodiments of the present invention.
Fig. 5 to Fig. 8 illustrate possible implementations of a first planetary gear stage for gearboxes of a series according to embodiments of the invention.
Fig. 9 illustrates an implementation of a gearbox that can be used with embodiments of the present invention.
Fig. 10 schematically illustrates an embodiment of the present invention.
Fig. 11 shows the outer ring diameter as a function of transmitted torque for a first planetary gear stage for a group of gearboxes of according to an embodiment of the invention.
Fig. 12 shows a comparison for the diameter of the ring gear as a function of the transmitted torque between prior art gearboxes and a platform gearbox according to embodiments of the invention.

### Description of illustrative embodiments

In the description different embodiments will be used to describe the invention.

Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way.

The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

The present invention provides a group of gearboxes, also referred to as platform gearboxes, for a wind turbine. The group of gearboxes comprises at least two series each comprising at least three gearboxes. Each of the gearboxes is suitable for different input torques, also referred to as rotor torques, higher than 0.2 MNm and comprises a first planetary gear stage comprising a sun gear, a ring gear, and three, four, five or six planet gears. For each of the gearboxes of a series the sun gears in the first planetary gear stage have a same number of teeth, the ring gears in the first planetary gear stage have a same number of teeth and the planet gears in the first planetary gear stage each have a same number of teeth. All gears in the first planetary gear stages of the gearboxes of a series have a same module. Each series of gearboxes in the group may be for a different torque range.

The idea of the present invention is to provide platform gearboxes for a predefined, fixed set of torque values by standardizing as many components or parts of the gearbox as possible.

The principle of the present invention gives benefits to dimensions and re-use of parts for the manufacturing of gearboxes. With re-use of parts is meant that parts, such as planet gears, ring gears and sun gears with particular dimensions and properties can be used for different gearboxes with different torque, and do not have to be redesigned each time a new gearbox with different required torque is ordered. Re-use of parts significantly reduces the time to market of gearboxes. It can furthermore significantly reduce the manufacturing costs of gearboxes. Moreover, according to embodiments of the invention, while they benefit from the advantages with respect to time to market and cost described above, such platform gearboxes are still reliable and robust products.

Fig. 4 schematically illustrates the principle of embodiments of the present invention. The invention provides a group G of gearboxes GB. The group G comprises at least two series SI, S2, S... of gearboxes GB. Each series S1, S2, S... comprises at least three gearboxes GB1, GB2, GB3, GB... each being suitable for a particular torque T1, T2, T3, T....

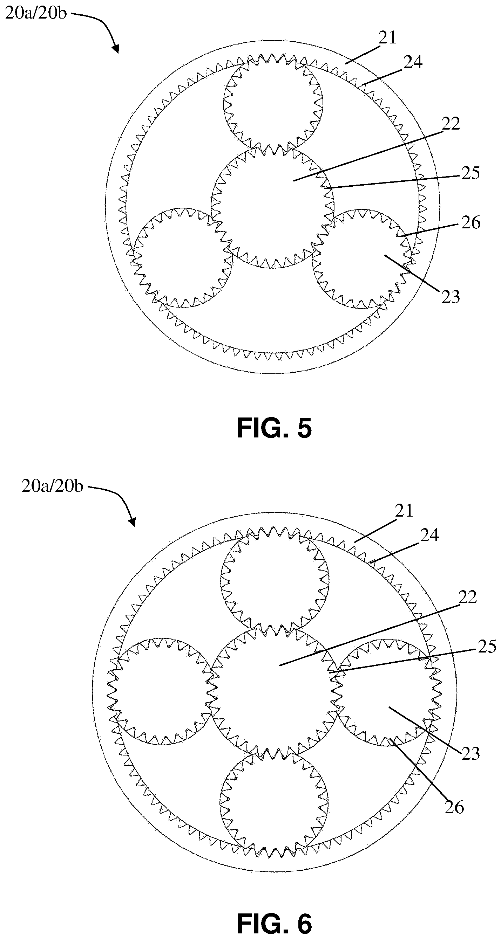

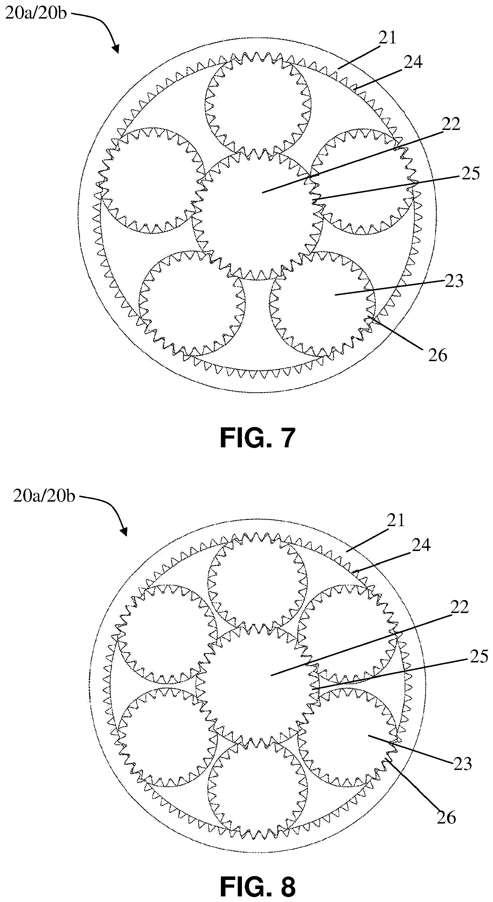

For example, a group G may comprise two series S1, S2. Each series S1, S2 may, for example, comprise three gearboxes GB1, GB2, GB3, each gearbox GB1, GB2, GB3 respectively having a torque T1, T2, T3. Each gearbox GB1, GB2, GB3 of a series SI, S2 comprises a first planetary gear stage 20a. According to embodiments of the invention, the first planetary gear stage 20a of a first gearbox GB 1 may comprise a sun gear 21, a ring gear 22 and three planet gears 23 (see Fig. 5), the first planetary gear stage 20a of a second gearbox GB2 may comprise a sun gear 21, a ring gear 22 and four planet gears 23 (see Fig. 6) and the first planetary gear stage 20a of a third gearbox GB3 may comprise a sun gear 21, a ring gear 22 and five planet gears 23 (see Fig. 7).

In each of the first planetary gear stages 20a of the three gearboxes GB1, GB2, GB3, the sun gears 21 have a same number of teeth 24. According to embodiments of the invention, the number of teeth 24 of the sun gear 21 in each of the planetary gear stages 20a may be between 22 and 32.

Furthermore, in each of the planetary gear stages 20a of the three gearboxes GB1, GB2, GB3 the ring gears 22 have a same number of teeth 25. The number of teeth 25 of the ring gear 22 in each of the planetary gear stages 20 may be such that the sum of the number of teeth 24 of the sun gear 21 and the number of teeth 25 of the ring gear 22 is 60, 120 or 180. Preferably, the sum of the number of teeth 24 of the sun gear 21 and the number of teeth 25 of the ring gear 22 is 120, because this allows transmitting the highest torque with smallest dimensions of the gears 21, 22.

Consequently, in case the sum of the number of teeth 24 of the sun gear 21 and the number of teeth 25 of the ring gear 22 is 120, the number of teeth 25 of the ring gear 22 in each of the planetary gear stages 20a may be between -88 and -98. It has to be noted that, as known by a person skilled in the art, the number of teeth 25 of the ring gear 22 is expressed as a negative number because the ring gear 22 is an internal gear. The sun gear 21 and planet gears 23 are external gears and thus their number of teeth 24, 26 is expressed as a positive number. It has to be understood that for determining the total number of teeth the positive or negative character is not taken into account, but only the actual number is.

Moreover, the planet gears 23 in each of the planetary gear stages 20a of the three gearboxes GB1, GB2, GB3 have a same number of teeth 26. The number of teeth 26 of the planet gears 23 may be between 29 and 34, for example between 30 and 33.

Furthermore, each of the gears 21, 22, 23 in each of the first planetary gear stages 20a of each gearbox GB1, GB2, GB3 of a series SI, S2 have a same module. As known by a person skilled in the art, the module is a measure for the size of the teeth of a gear.

More particularly, the module of a gear is the ratio between the diameter of the gear and the number of teeth of the gear.

Consequently, the sun gears 21 in the first planetary gear stage 20a of each gearbox GB1, GB2, GB3 of a series S1, S2 may have same dimensions, all ring gears 22 in the first planetary gear stage 20a of each gearbox GB1, GB2, GB3 of a series S1, S2 may have same dimensions and all planet gears 23 in the first planetary gear stage 20a of each gearbox GB1, GB2, GB3 of a series S1, S2 may have same dimensions. With same dimensions is meant that the gears have a same diameter, thickness and width. In a series S1, S2, the dimensions of the planet gears 23 are determined by the dimensions of the planet gears 23 in the gearbox GB of which the first planetary gear stage 20a comprises the highest number of planet gears 23. For example, in the present example, the dimensions of the planet gears 23 is determined by the dimensions of the planet gears 23 in GB3 which comprises five planet gears 23.

From the above, it is clear that the intention of the invention is to standardize as much parts, i.e. sun gear 21, ring gear 22 and planet gears 23, of a gearbox GB as possible.

It has to be understood that the above example in which the group G comprises two series S1, S2 of gearboxes GB each comprising three gearboxes GB1, GB2, GB3 of which the first planetary gear stage 20a comprises three, four or five planet gears 23, is not intended to limit the invention in any way. According to other embodiments of the invention, the series S1, S2 of gearboxes GB may comprise three gearboxes GB1, GB2, GB3 comprising a first planetary gear stage 20a with four, five or six planets (see Fig. 8) or the series S1, S2 may comprise four gearboxes GB1, GB2, GB3, GB4 comprising a first planetary gear stage 20a with three, four, five or six planet gears 23.

According to still further embodiments of the invention, the group G of gearboxes GB may comprise more than two series S1, S2, such as, for example but not limited to, three series S1, S2, S3 or four series S1, S2, S3, S4.

Each of the gearboxes GB1, GB2, GB3, ... of a series S1, S2, ... may, according to embodiments of the invention, furthermore comprise a second planetary gear stage 20b. Similar as the first planetary gear stage 20a, each of the second planetary gear stages 20b comprises a sun gear 21, a ring gear 22 and three, four, five or six planet gears 23 (see respectively Fig. 5, Fig. 6, Fig. 7 and Fig. 8). According to particular embodiments of the invention, each of the second planetary gear stages 20b may comprises a sun gear 21, a ring gear 22 and three or four planet gears 23.

Again, similar as for the first planetary gear stage 20a, the sun gear 21, ring gear 22 and planet gears 23 are, according to embodiments of the invention, standardized.

Therefore, the sun gears 21 in each of the second planetary gear stages 20b of each of the gearboxes GB1, GB2, GB3, ... in a series S1, S2, ... may have a same number of teeth 24, the ring gears 22 in each of the second planetary gear stages 20b of each of the gearboxes GB1, GB2, GB3, ... in a series S1, S2, ... may have a same number of teeth 25, and the planet gears 23 in each of the second planetary gear stages 20b of each of the gearboxes GB1, GB2, GB3, ... in a series S1, S2, ... may have a same number of teeth 26.

The number of teeth 24 of the sun gear 21 in the second planetary gear stage 20b of each of the gearboxes GB1, GB2, GB3, ... in a series S1, S2, ... may be between 20 and 36 and may, for example, according to specific embodiments, be 24 or 36. In the second planetary gear stage, according to embodiments of the invention, the number of teeth 25 of the ring gear 22 may be such that the sum of the teeth 24 of the sun gear 21 and the teeth 25 of the ring gear 22 may for example be 96 or 108 or 120 or 132 or 144 or 156. Preferably the sum of the teeth of the sun gear and the teeth of the ring gear may be 120, because this allows transmitting the highest torque with the smallest dimensions of the gears 21, 22. Consequently, in case the sum of the number of teeth 24 of the sun gear 21 and the number of teeth 25 of the ring gear 22 is 120, the number of teeth 25 of the ring gear 22 in each of the planetary gear units 20 may, according to this specific example, be between 84 and 100, and may, for example, be 96 or 84.

The number of teeth 26 of the planet gears 23 in the second planetary gear stage 20b may be between 50 and 55, and may for example be 52 or 53.

Also for the second planetary gear unit 20b in each of the gearboxes GB1, GB2, GB3 of a series S1, S2, the sun gears 21 may have same dimensions, the ring gears 22 may have same dimensions and the planet gears 23 may have same dimensions. With same dimensions is meant that the gears have a same diameter, thickness and width.

According to embodiments of the invention, in case the gearboxes GB1, GB2, GB3, GB... in the series S1, S2, S... each comprise a first and second planetary gear stage 20a, 20b, the first planetary gear stage 20a and the second planetary gear stage 20b may have a common ring gear 22. This means that the ring gear 21 of the first planetary gear stage 20a may be the same as the ring gear 22 of the second planetary gear stage 20b or that a same ring gear 22 is used for both the first and second planetary gear stage 20a, 20b.

However, according to other embodiments of the invention, the first planetary gear stage 20a and the second planetary gear stage 20b may each have their own ring gear 22. According to such embodiments, the ring gear 22 of the first planetary gear stage 20a and the ring gear 22 of the second planetary gear stage 20b may have a same diameter or may have a different diameter.

According to further embodiments of the invention, each of the gearboxes GB1, GB2, GB3, GB... of the series S1, S2, S... may furthermore comprise a parallel gear unit 30. As known by a person skilled in the art, the parallel gear unit may be a one-stage parallel gear unit or may be a dual-stage parallel gear unit.

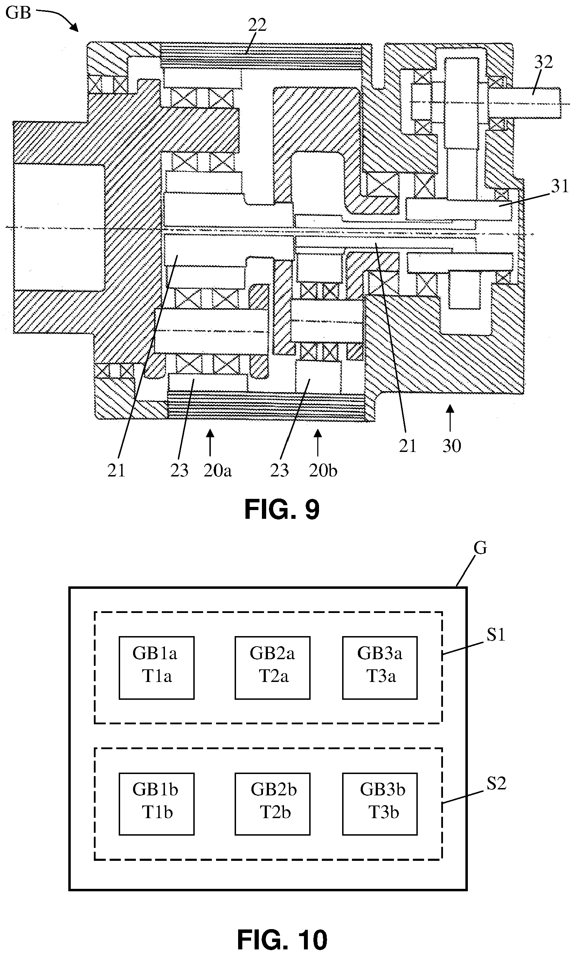

Fig. 9 illustrates an embodiment of a gearbox GB which can be used with the present invention. The gearbox GB illustrated in this figure comprises a first planetary gear stage 20a, a second planetary gear stage 20b and a parallel gear stage 30. As can be seen from the figure, the first and second planetary gear stage 20a, 20b have a common ring gear 22. It has to be understood that this is not intended to limit the invention in any way. The first and second planetary gear unit 20a, 20b may also each have their own ring gear 22 as described above. In such cases, the ring gear 22 of the first and second planetary gear unit 20a, 20b may have a same diameter or may have a different diameter.

Furthermore, the gearbox GB in Fig. 9 comprises a one-stage parallel gear unit comprising a low speed shaft 31 and a high speed shaft 32. Again it has to be understood that this is only by way of an example and is not intended to limit the invention in any way. According to other embodiments of the invention, the parallel gear unit 30 may also be a two-stage parallel gear unit comprising a low speed shaft, an intermediate shaft and a high speed shaft.

Hereinafter, a specific example will be described for illustrating the principle of the present invention. It has to be understood that this is not intended to limit the invention in any way.

The group G of gearboxes GB in this example, or platform, may comprise two series S1, S2 of each three gearboxes GB1, GB2, GB3, as is schematically illustrated in Fig. 10.

A first series S1 of gearboxes GB1a, GB2a, GB3a may comprise three gearboxes GB1a, GB2a, GB3a, a first gearbox GB1a being suitable for a torque T1a of 1.250 MNm, a second gearbox GB2a being suitable for a torque T2a of 1.500 MNm and a third gearbox GB3a being suitable for a torque T3a of 1.800 MNm (see table I below). In the example given, all three gearboxes GB1a, GB2a, GB3a comprise a first and second planetary gear stage 20a, 20b.

**Table I - Overview of the properties for the gearboxes of a first series S1 of group G**

| | GB1a | GB2a | GB3a |
|---|---|---|---|
| Dimensional torque | 1.250 MNm | 1.500 MNm | 1.800 MNm |
| # planet gears 1^{st} stage | 3 | 4 | 5 |
| # teeth planet gears 1^{st} stage | 32 | 32 | 32 |
| # teeth sun gear 1^{st} stage | 27 | 27 | 27 |
| # teeth ring gear 1^{st} stage | -93 | -93 | -93 |
| Diameter ring gear 1^{st} stage | < 1.5 m | < 1.5 m | < 1.5 m |
| Module 1^{st} stage | 14 | 14 | 14 |
| # planet gears 2^{nd} stage | 3 | 3 | 4 |
| # teeth planet gears 2^{nd} stage | 52 | 52 | 52 |
| # teeth sun gear 2^{nd} stage | 24 | 24 | 24 |
| # teeth ring gear 2^{nd} stage | -132 | -132 | -132 |
| Diameter ring gear 2^{nd} stage | < 1.5 m | < 1.5 m | < 1.5 m |
| Length | < 2.25 m | < 2.25 m | < 2.25 m |

The first planetary gear stage 20a of gearbox GB1a may comprise three planet gears 23, the first planetary gear stage 20a of gearbox GB2a may comprise four planet gears 23 and the first planetary gear stage 20a of gearbox GB3a may comprise five planet gears 23. Each of the planet gears 23 in the first planetary gear stage 20a of each gearbox GB1a, GB2a, GB3a may have 32 teeth. Each of the sun gears 21 of the first planetary gear stage 20a of each gearbox GB1a, GB2a, GB3a may have 27 teeth and the number of teeth of each of the ring gears 22 in the first planetary gear stage of each gearbox GB1a, GB2a, GB3a may be -93. The sum of the teeth of the sun gear 21 and the teeth of the ring gear 22 is, in the example given, 120. The outer diameter of the ring gear 22 of the first planetary stage 20a in each gearbox GB1a, GB2a, GB3a may be smaller than 1.5 m. The first planetary gear stage 20a may have module 14.

The second planetary gear stage 20b of gearbox GB1a may comprise three planet gears 23, the second planetary gear stage 20b of gearbox GB2a may also comprise three planet gears 23 and the second planetary gear stage 20b of gearbox GB3a may comprise four planet gears 23. Each of the planet gears 23 in the second planetary gear stage 20b of gearboxes GB1a, GB2a, GB3a may have 52 teeth. Each of the sun gears 21 in the second planetary gear stage 20b of gearboxes GB1a, GB2a, GB3a may have 24 teeth and the number of teeth of each of the ring gears 22 in the second planetary gear stage 20b of gearboxes GB1a, GB2a, GB3a may be -132. In the example given, the sum of the teeth of the sun gear 21 and the teeth of the ring gear 22 is 156. The outer diameter of the ring gear 22 of the second planetary stage 20b in each of the gearboxes GB1a, GB2a, GB3a may be smaller than 1.5 m.

The total length of the first and second planetary gear stage 20a, 20b together may, in the example given, be smaller than 2.25 m.

A second series S2 of gearboxes GB of the group G in the example given may also comprise three gearboxes GB1b, GB2b, GB3b, but these gearboxes GB1b, GB2b, GB3b are suitable for different torques T1b, T2b, T3b covering a different torque range than the gearboxes GB1a, GB2a, GB3a of the first series S1. A first gearbox GB1b of the second series S2 may be suitable for a torque T1b of 2.150 MNm, a second gearbox GB2b may be suitable for a torque T2b of 2.580 MNm and a third gearbox GB3b may be suitable for a torque T3b of 3.096 MNm (see table II below). Again, all three gearboxes GB1b, GB2b, GB3b comprise a first and second planetary gear stage 20a, 20b.

The first planetary gear stage 20a of gearbox GB1b may comprise three planet gears 23, the first planetary gear stage 20a of gearbox GB2b may comprise four planet gears 23 and the first planetary gear stage 20a of gearbox GB3b may comprise five planet gears 23. Each of the planet gears 23 in the first planetary gear stage 20a of gearboxes GB1b, GB2b, GB3b may have 31 teeth. Each of the sun gears 21 of the first planetary gear stage 20a of gearboxes GB1b, GB2b, GB3b may have 27 teeth and the number of teeth of each of the ring gears 22 in the first planetary gear stage 20a of gearboxes GB1b, GB2b, GB3b may be -93. The sum of the teeth of the sun gear 21 and the teeth of the ring gear 22 is 120. The outer diameter of the ring gear 22 of the first planetary stage 20a in each of gearboxes GB1b, GB2b, GB3b may be smaller than 1.75 m. The first planetary gear stage 20a may have module 16.

**Table II - Overview of the properties for the gearboxes of a second series S2 of group G**

| | GB1b | GB2b | GB3b |
|---|---|---|---|
| Dimensional torque | 2.150 MNm | 2.580 MNm | 3.096 MNm |
| # planet gears 1^{st} stage | 3 | 4 | 5 |
| # teeth planet gears 1^{st} stage | 31 | 31 | 31 |
| # teeth sun gear 1^{st} stage | 27 | 27 | 27 |
| # teeth ring gear 1^{st} stage | -93 | -93 | -93 |
| Diameter ring gear 1^{st} stage | < 1.75 m | < 1.75 m | < 1.75 m |
| Module 1^{st} stage | 16 | 16 | 16 |
| # planet gears 2^{nd} stage | 3 | 3 | 4 |
| # teeth planet gears 2^{nd} stage | 53 | 53 | 53 |
| # teeth sun gear 2^{nd} stage | 24 | 24 | 24 |
| # teeth ring gear 2^{nd} stage | -132 | -132 | -132 |
| Diameter ring gear 2^{nd} stage | < 1.5 m | < 1.5 m | < 1.5 m |
| Length | < 2.75 m | < 2.75 m | < 2.75 m |

The second planetary gear stage 20b of gearbox GB1b may comprise three planet gears 23, the second planetary gear stage 20b of gearbox GB2b may also comprise three planet gears 23 and the second planetary gear stage 20b of gearbox GB3b may comprise four planet gears 23. Each of the planet gears 23 in the second planetary gear stage 20b of gearboxes GB1b, GB2b, GB3b may have 53 teeth. Each of the sun gears 21 in the second planetary gear stage 20b of gearboxes GB1b, GB2b, GB3b may have 24 teeth and the number of teeth of each of the ring gears 22 in the second planetary gear stage 20b of gearboxes GB1b, GB2b, GB3b may be -132. In the example given, the sum of the teeth of the sun gear 21 and the teeth of the ring gear 22 is 156. The outer diameter of the ring gear 21 of the second planetary stage 20b in each of gearboxes GB1b, GB2b, GB3b may be smaller than 1.5 m.

The total length of the first and second planetary gear stage 20a, 20b together may, in the example given, be smaller than 2.75 m.

As illustrated above, with one basic group G comprising two series S1, S2 of each three gearboxes GB1, GB2, GB3, a torque range of between 1.25 MNm and 3.10 MNm can be covered. Per series, sun gear 21, ring gear 22, planet gears 23 and consequently also planet bearings are standardized, or in other words are the same, for the first planetary gear stage 20a and for the second planetary gear stage 20b.

The possibility to re-use parts of the gearbox reduces design time because these parts do not repeatedly have to be designed over and over again, and may thus significantly reduce manufacturing costs and time to market.

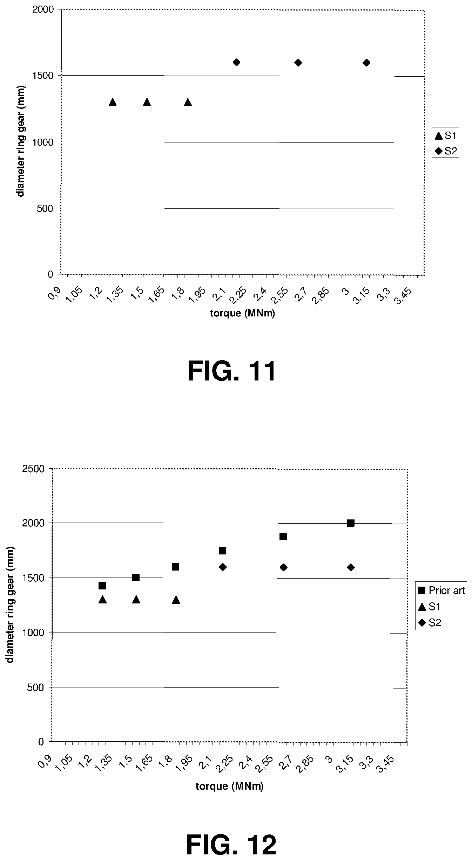

Fig. 11 shows the outer diameter of the ring gear 22 as a function of transmitted torque for the first planetary gear stage 20a for the group G of gearboxes GB as described above in the specific example. In the figure the triangles show the torque as a function of the diameter of the ring gear 22 of the first planetary gear stage 20a for the first series S1 and the rhombs show the torque as a function of the diameter of the ring gear 22 of the first planetary gear stage 20a for the second series S2. When comparing conventional gearboxes covering a same torque range with the gearboxes of a group G according to an embodiments of the invention, it can be seen that a same torque range can be obtained with smaller dimensions of the first planetary gear stage 20a. This is illustrated in Fig. 12 which combines Fig. 3 and Fig. 11.

Fig. 12 illustrates that, by providing a group G of gearboxes GB as described in the present invention, a same torque range can be covered as with prior art gearboxes only by providing series S1, S2 of gearboxes GB in which only the number of planet gears 23 has to be changed, there where for prior art gearboxes the different parts, i.e. sun gears, ring gears, planet gears and consequently planet bearings, have to designed for each of the gearboxes required. Furthermore, as also can be seen from Fig. 12, by applying the principle of embodiments of the present invention, the dimensions of the first planetary gear stage 20a, and thus the dimensions of the entire gearbox GB, can be kept smaller than for conventional gearboxes. This is again an advantage of the present invention because nowadays a lot of effort is done for keeping the dimensions of a gearbox as small as possible while still maintaining suitability for a particular torque.

## Claims

1. A group (G) of gearboxes (GB) for a wind turbine, the group (G) of gearboxes (GB) comprising at least two series (S1, S2) of gearboxes (GB), each series (S1, S2) comprising at least three gearboxes (GB1, GB2, GB3) for different torques (T1, T2, T3) higher than 0.2 MNm, each of the gearboxes (GB1, GB2, GB3) of a series (S1, S2) comprising a first planetary gear stage comprising a sun gear, a ring gear, and planet gears, wherein the first planetary gear stage of a first gearbox (GB1) of the series (S1, S2) comprises exactly three planet gears, the first planetary gear stage of a second gearbox (BG2) of the series (S1, S2) comprises exactly four planet gears and the first planetary gear stage of a third gearbox (GB3) of the series (S1, S2) comprises exactly five planet gears, or the first planetary gear stage of the first gearbox (GB1) of the series (S1, S2) comprises exactly four planet gears, the first planetary gear stage of the second gearbox (BG2) of the series (S1, S2) comprises exactly five planet gears and the first planetary gear stage of the third gearbox (GB3) of the series (S1, S2) comprises exactly six planet gears, and wherein for each of the gearboxes (GB1, GB2, GB3) of the series (S1, S2) the sun gears (21) in the first planetary gear stage (20) have a same number of teeth (24), the ring gears (22) in the first planetary gear stage (20a) have a same number of teeth (25), the planet gears (23) in the first planetary gear stage (20a) each have a same number of teeth (26) and all gears (21, 22, 23) in the first planetary gear stage (20a) have a same module, wherein each of the gearboxes (GB1, GB2, GB3) of a series (S1, S2) furthermore comprises a second planetary gear stage (20b) comprising a sun gear (21), a ring gear (22) and three, four, five or six planet gears (23), and the first planetary gear stage (20a) and the second planetary gear stage (20b) have a common ring gear (22).

2. A group (G) of gearboxes (GB) according to claim 1, wherein each series (S1, S2) of gearboxes (GB1, GB2, GB3) covers a different torque range.

3. A group (G) of gearboxes (GB) according to claim 1 or 2, wherein for the first planetary gear stage (20a) in each gearbox (GB1, GB2, GB3) of a series (S1, S2) the sum of the teeth (25) of the ring gear (22) and the teeth (24) of the sun gear (21) is 120.

4. A group (G) of gearboxes (GB) according to claim 3, wherein the number of teeth (24) of the sun gear (21) in the first planetary gear stage (20a) is between 22 and 32.

5. A group (G) of gearboxes (GB) according to claim 3 or 4, the first planetary gear stage (20a) of each of the gearboxes (GB1, GB2, GB3) of a series (S1, S2) comprising three, four or five planet gears (23), wherein the number of teeth (24) of the sun gear (21) in the first planetary gear stage (20a) is 27, the number of teeth (26) of the planet gears (23) in the first planetary gear stage (20a) is between 30 and 33, and the number of teeth (25) of the ring gear (22) in the first planetary gear stage (20a) is -93.

6. A group (G) of gearboxes (GB) according to any of the previous claims, wherein each of the gearboxes (GB1, GB2, GB3) of a series (S1, S2) comprises a second planetary gear stage (20b) comprising three or four planet gears (23).

7. A group (G) of gearboxes (GB) according to any of the previous claims, wherein in each of the gearboxes (GB1, GB2, GB3) of a series (S1, S2) the sun gears (21) in the second planetary gear stage (20b) have a same number of teeth (24), the ring gears (22) in the second planetary gear stage (20b) have a same number of teeth (25), the planet gears (23) in the second planetary gear stage (20b) have a same number of teeth (26) and all gears (21, 22, 23) in the second planetary gear stage (20b) have a same module.

8. A group (G) of gearboxes (GB) according to any of the previous claims, wherein each of the gearboxes (GB1, GB2, GB3) of a series (S1, S2) furthermore comprises a parallel gear unit (30).

9. A group (G) of gearboxes (GB) according to claim 8, wherein the parallel gear unit (30) is a one-stage parallel gear unit or a two-stage parallel gear unit.

## Patentansprüche

1. Gruppe (G) von Getriebegehäusen (GB) für eine Windkraftanlage, wobei die Gruppe (G) von Getriebegehäusen (GB) mindestens zwei Reihen (S1, S2) Getriebegehäuse (GB) umfassen, wobei jede Reihe (S1, S2) mindestens drei Getriebegehäuse (GB1, GB2, GB3) für verschiedene Drehmomente (T1, T2, T3) von mehr als 0,2 mNm umfasst, wobei jedes der Getriebegehäuse (GB1, GB2, GB3) einer Reihe (S1, S2) eine erste Planetenradstufe umfasst, die ein Sonnenrad, ein Hohlrad und Planetenräder umfasst, wobei die erste Planetenradstufe eines ersten Getriebegehäuses (GB1) der Reihe (S1, S2) genau drei Planetenräder umfasst, wobei die erste Planetenradstufe eines zweiten Getriebegehäuses (BG2) der Reihe (S1, S2) genau vier Planetenräder umfasst und die erste Planetenradstufe eines dritten Getriebegehäuses (GB3) der Reihe (S1, S2) genau fünf Planetenräder umfasst oder die erste Planetenradstufe des ersten Getriebegehäuses (GB1) der Reihe (S1, S2) genau vier Planetenräder umfasst, die erste Planetenradstufe des zweiten Getriebegehäuses (BG2) der Reihe (S1, S2) genau fünf Planetenräder umfasst und die die erste Planetenradstufe des dritten Getriebegehäuses (GB3) der Reihe (S1, S2) genau sechs Planetenräder umfasst und wobei bei jedem Getriebegehäuse (GB1, GB2, GB3) der Reihe (S1, S2) die Sonnenräder (21) in der ersten Planetenradstufe (20) die gleiche Anzahl von Zähnen (24) aufweisen, die Hohlräder (22) in der ersten Planetenradstufe (20a) dieselbe Anzahl von Zähnen (25) aufweisen, die Planetenräder (23) in der ersten Planetenradstufe (20a) dieselbe Anzahl von Zähnen (26) aufweisen und alle Zahnräder (21, 22, 23) in der ersten Planetenradstufe (20a) dasselbe Modul aufweisen, wobei jedes der Getriebegehäuse (GB1, GB2, GB3) einer Reihe (S1, S2) des Weiteren eine zweite Planetenradstufe (20b) umfasst, die ein Sonnenrad (21), ein Hohlrad (22) und drei, vier, fünf oder sechs Planetenräder (23) umfasst, und
wobei die erste Planetenradstufe (20a) und die zweite Planetenradstufe (20b) ein gemeinsames Hohlrad (22) aufweisen.

2. Gruppe (G) von Getriebegehäusen (GB) nach Anspruch 1, wobei jede Reihe (S1, S2) von Getriebegehäusen (GB1, GB2, GB3) einen anderen Drehmomentbereich abdeckt.

3. Gruppe (G) von Getriebegehäusen (GB) nach Anspruch 1 oder 2, wobei in der ersten Planetenradstufe (20a) in jedem Getriebegehäuse (GB1, GB2, GB3) einer Reihe (S1, S2) die Summe der Zähne (25) des Hohlrads (22) und der Zähne (24) des Sonnenrads (21) 120 ist.

4. Gruppe (G) von Getriebegehäusen (GB) nach Anspruch 3, wobei die Anzahl von Zähnen (24) des Sonnenrads (21) in der ersten Planetenradstufe (20a) zwischen 22 und 32 liegt.

5. Gruppe (G) von Getriebegehäusen (GB) nach Anspruch 3 oder 4, wobei die erste Planetenradstufe (20a) jedes der Getriebegehäuse (GB1, GB2, GB3) einer Reihe (S1, S2) drei, vier oder fünf Planetenräder (23) umfasst, wobei die Anzahl der Zähne (24) des Sonnenrads (21) in der ersten Planetenradstufe (20a) 27 ist, die Anzahl der Zähne (26) der Planetenräder (23) in der ersten Planetenradstufe (20a) zwischen 30 und 33 liegt und die Anzahl der Zähne (25) des Hohlrads (22) in der ersten Planetenradstufe (20a) -93 ist.

6. Gruppe (G) von Getriebegehäusen (GB) nach einem der vorstehenden Ansprüche, wobei jedes der Getriebegehäuse (GB1, GB2, GB3) einer Reihe (S1, S2) eine zweite Planetenradstufe (20b) umfasst, die drei oder vier Planetenräder (23) umfasst.

7. Gruppe (G) von Getriebegehäusen (GB) nach einem der vorstehenden Ansprüche, wobei in jedem der Getriebegehäuse (GB1, GB2, GB3) einer Reihe (S1, S2) die Sonnenräder (21) in der zweiten Planetenradstufe (20b) dieselbe Anzahl von Zähnen (24) aufweisen, die Hohlräder (22) in der zweiten Planetenradstufe (20b) dieselbe Anzahl von Zähnen (25) aufweisen, die Planetenräder (23) in der zweiten Planetenradstufe (20b) dieselbe Anzahl von Zähnen (26) aufweisen und alle Zahnräder (21, 22, 23) in der zweiten Planetenradstufe (20b) dasselbe Modul aufweisen.

8. Gruppe (G) von Getriebegehäusen (GB) nach einem der vorstehenden Ansprüche, wobei jedes der Getriebegehäuse (GB1, GB2, GB3) einer Reihe (S1, S2) ferner eine parallele Zahnradeinheit (30) umfasst.

9. Gruppe (G) von Getriebegehäusen (GB) nach Anspruch 8, wobei die parallele Zahnradeinheit (30) eine einstufige parallele Zahnradeinheit oder eine zweistufige parallele Zahnradeinheit ist.

## Revendications

1. Groupe (G) de boîtes de vitesses (GB) pour une éolienne, le groupe (G) de boîtes de vitesses (GB) comprenant au moins deux séries (S1, S2) de boîtes de vitesses (GB), chaque série (S1, S2) comprenant au moins trois boîtes de vitesses (GB1, GB2, GB3) pour des couples différents (T1, T2, T3) supérieurs à 0,2 MNm, chacune des boîtes de vitesses (GB1, GB2, GB3) d'une série (S1, S2) comprenant un premier étage d'engrenages planétaires comprenant une roue solaire, une couronne dentée, et des satellites, le premier étage d'engrenages planétaires d'une première boîte de vitesses (GB1) de la série (S1, S2) comprenant exactement trois satellites, le premier étage d'engrenages planétaires d'une deuxième boîte de vitesses (BG2) de la série (S1, S2) comprenant exactement quatre satellites et le premier étage d'engrenages planétaires d'une troisième boîte de vitesses (GB3) de la série (S1, S2) comprenant exactement cinq satellites, ou le premier étage d'engrenages planétaires de la première boîte de vitesses (GB1) de la série (S1, S2) comprenant exactement quatre satellites, le premier étage d'engrenages planétaires de la deuxième boîte de vitesses (BG2) de la série (S1, S2) comprenant exactement cinq satellites et le premier étage d'engrenages planétaires de la troisième boîte de vitesses (GB3) de la série (S1, S2) comprenant exactement six satellites, et, pour chacune des boîtes de vitesses (GB1, GB2, GB3) de la série (S1, S2), les roues solaires (21) dans le premier étage d'engrenages planétaires (20) ont le même nombre de dents (24), les couronnes dentées (22) dans le premier étage d'engrenages planétaires (20a) ont le même nombre de dents (25), les satellites (23) dans le premier étage d'engrenages planétaires (20a) ont chacun le même nombre de dents (26) et tous les engrenages (21, 22, 23) dans le premier étage d'engrenages planétaires (20a) ont le même module, chacune des boîtes de vitesses (GB1, GB2, GB3) d'une série (S1, S2) comprenant en outre un deuxième étage d'engrenages planétaires (20b) comprenant une roue solaire (21), une couronne dentée (22) et trois, quatre, cinq ou six satellites (23), et le premier étage d'engrenages planétaires (20a) et le deuxième étage d'engrenages planétaires (20b) ayant une couronne dentée commune (22).

2. Groupe (G) de boîtes de vitesses (GB) selon la revendication 1, dans lequel chaque série (S1, S2) de boîtes de vitesses (GB1, GB2, GB3) couvre une plage de couple différente.

3. Groupe (G) de boîtes de vitesses (GB) selon la revendication 1 ou 2, dans lequel, pour le premier étage d'engrenages planétaires (20a) dans chaque boîte de vitesses (GB1, GB2, GB3) d'une série (S1, S2), la somme des dents (25) de la couronne dentée (22) et des dents (24) de la roue solaire (21) est 120.

4. Groupe (G) de boîtes de vitesses (GB) selon la revendication 3, dans lequel le nombre de dents (24) de la roue solaire (21) dans le premier étage d'engrenages planétaires (20a) est compris entre 22 32.

5. Groupe (G) de boîtes de vitesses (GB) selon la revendication 3 ou 4, le premier étage d'engrenages planétaires (20a) de chacune des boîtes de vitesses (GB1, GB2, GB3) d'une série (S1, S2) comprenant trois, quatre ou cinq satellites (23), le nombre de dents (24) de la roue solaire (21) dans le premier étage d'engrenages planétaires (20a) étant de 27, le nombre de dents (26) des satellites (23) dans le premier étage d'engrenages planétaires (20a) étant compris entre 30 et 33, et le nombre de dents (25) de la couronne dentée (22) dans le premier étage d'engrenages planétaires (20a) étant de -93.

6. Groupe (G) de boîtes de vitesses (GB) selon l'une quelconque des revendications précédentes, dans lequel chacune des boîtes de vitesses (GB1, GB2, GB3) d'une série (S1, S2) comprend un deuxième étage d'engrenages planétaires (20b) comprenant trois ou quatre satellites (23) .

7. Groupe (G) de boîtes de vitesses (GB) selon l'une quelconque des revendications précédentes, dans lequel, dans chacune des boîtes de vitesses (GB1, GB2, GB3) d'une série (S1, S2), les roues solaires (21) dans le deuxième étage d'engrenages planétaires (20b) ont le même nombre de dents (24), les couronnes dentées (22) dans le deuxième étage d'engrenages planétaires (20b) ont le même nombre de dents (25), les satellites (23) dans le deuxième étage d'engrenages planétaires (20b) ont le même nombre de dents (26) et tous les engrenages (21, 22, 23) dans le deuxième étage d'engrenages planétaires (20b) ont un même module.

8. Groupe (G) de boîtes de vitesses (GB) selon l'une quelconque des revendications précédentes, dans lequel chacune des boîtes de vitesses (GB1, GB2, GB3) d'une série (S1, S2) comprend en outre une unité d'engrenage parallèle (30).

9. Groupe (G) de boîtes de vitesses (GB) selon la revendication 8, dans lequel l'unité d'engrenage parallèle (30) est une unité d'engrenage parallèle à un étage ou une unité d'engrenage parallèle à deux étages.
